# EUROPEAN PATENT APPLICATION

(11) **EP 4 749 603 A1**
(43) Date of publication of application: **27.05.2026**
(21) Application number: 25211313.9
(22) Date of filing: 27.10.2025
(51) Int. Cl.: G08G 5/21, G08G 5/55, G08G 5/57, G08G 5/59, G08G 5/34, G08G 5/54, G08G 5/58

(54) **SYSTEMS AND METHODS FOR AUTONOMOUS VEHICLE CONTINGENCY PLANNING WITH THREE-DIMENSIONAL VOLUMES**

(30) Priority: 22.11.2024 US 202418957239
(71) Applicant: The Boeing Company, Arlington, VA 22202 (US)
(72) Inventor: GREGG, Andrew Georges, Arlington, 22202 (US); BOSWORTH, William, Arlington, 22202 (US)
(74) Representative: Boult Wade Tennant LLP

(57) **Abstract**

A device includes a memory configured to store data that indicates, for a region associated with a mission, a plurality of partitions in the region and, for each of the partitions, a contingency route. The device includes one or more processors and configured to, based on detection of a first contingency event, locate a particular airspace in the region corresponding to a current location of the autonomous aerial vehicle; determine a path for the autonomous aerial vehicle to travel from the current location to the contingency route for the particular airspace; and generate one or more commands to cause the autonomous aerial vehicle to travel to the contingency route.

## Description

### FIELD OF THE DISCLOSURE

The subject disclosure is generally related to autonomous vehicle contingency planning with three-dimensional volumes.

### BACKGROUND

Use of unmanned aerial vehicles is becoming more commonplace. Correspondingly, contingency route planning for unmanned vehicles is increasingly important for operational success and safety, especially in dynamic environments where unexpected obstacles or changes in conditions can arise. Autonomous vehicles (e.g., aerial, terrestrial, or marine unmanned vehicles), can operate in unpredictable settings where the primary route may become compromised due to factors like weather changes, equipment failure, or unforeseen environmental challenges. Having pre-planned alternative routes allows vehicle operators to adapt to these changes, minimizing the risk of mission failure and potential damage to the vehicle.

For example, without contingency planning, an autonomous vehicle might be forced into a hazardous situation, leading to collisions, loss of the vehicle, or unintended harm to the environment or nearby entities. Contingency routes allow the vehicle to safely bypass danger zones, ensuring the mission continues with minimal disruption. Contingency route planning enhances the reliability and efficiency of unmanned vehicle operations.

For vehicle operators, contingency planning and plan verification can be a costly portion of the design and implementation of rigorous autonomous aircraft. Certain traditional mission planning is defined by routes made of waypoints. Certain traditional contingency planning uses specific waypoints as branch points for a new change in the mission. In the event of a contingency event occurring during a leg of the mission, the vehicle would move to a particular waypoint and then branch to a contingency route associated with that particular waypoint. In these scenarios, if a mission changes, all the contingency routes may need to be replanned. Because contingency routes often go to the ground and the vehicle may be in a degraded state, planning is more complex and the rigor required of the plan is more complex.

### SUMMARY

There is described herein a device comprising a memory configured to store data. The data indicates, for a region associated with travel of an autonomous vehicle, a plurality of partitions of the region and, for each of the partitions, a contingency route for the autonomous vehicle. The device also includes one or more processors coupled to the memory and configured to, based on detection of a first contingency event, locate a particular partition of the region corresponding to a current location of the autonomous vehicle. The one or more processors are also configured to determine a path for the autonomous vehicle to travel from the current location to the contingency route for the particular partition. The one or more processors are also configured to generate one or more commands to cause the autonomous vehicle to travel to the contingency route.

There is described herein an autonomous aerial vehicle comprising a memory configured to store data. The data indicates, for a region associated with a mission, a plurality of airspaces of the region and, for each of the airspaces, a contingency route. The device also includes one or more processors coupled to the memory and configured to, based on detection of a first contingency event during flight, locate a particular airspace of the region corresponding to a current location of the autonomous aerial vehicle. The one or more processors are also configured to determine a path for the autonomous aerial vehicle to travel from the current location to the contingency route for the particular airspace. The one or more processors are also configured to generate one or more commands to cause the autonomous aerial vehicle to travel to the contingency route.

There is described herein a method comprising determining, at a computing system, a particular partition corresponding to a current location of an autonomous vehicle in response to detection of a first contingency event. The particular partition is one of a plurality of partitions for a region associated with travel of the autonomous vehicle. The method also includes retrieving, at the computing system from data for the region, information associated with a contingency route associated with the particular partition. The method also includes determining, at the computing system, a path for the autonomous vehicle to travel from the current location to the contingency route. The method also includes generating, at the computing system, one or more commands to cause the autonomous vehicle to travel to the contingency route.

The features, functions, and advantages described herein can be achieved independently in various examples or can be combined in yet other examples, further details of which can be found with reference to the following description and drawings.

### BRIEF DESCRIPTION OF THE DRAWINGS

FIG. 1 depicts an example system for autonomous vehicle contingency planning with three-dimensional volumes, in accordance with the subject disclosure.
FIG. 2 illustrates an example region divided into a plurality of partitions, in accordance with the subject disclosure.
FIG. 3A illustrates an example mission that includes a plurality of waypoints across a region of an airspace, in accordance with the subject disclosure.
FIG. 3B illustrates another example mission that includes a plurality of waypoints across a region of an airspace, in accordance with the subject disclosure.
FIG. 4 illustrates a method for autonomous vehicle contingency planning with three-dimensional volumes, in accordance with the subject disclosure.
FIG. 5 is a block diagram of a computing environment including a computing device configured to support examples of computer-implemented methods and computer-executable program instructions (or code) according to the subject disclosure.
FIG. 6 is a flowchart illustrating an example of a life cycle of an aircraft that includes a system for autonomous vehicle contingency planning with three-dimensional volumes, in accordance with the subject disclosure.
FIG. 7 is a block diagram of an illustrative aircraft that includes a system for autonomous vehicle contingency planning, in accordance with the subject disclosure.

### DETAILED DESCRIPTION

The systems and methods disclosed herein base contingency route planning for autonomous vehicles in a three-dimensional space, rather than being based on waypoints and branch points. The three-dimensional space through which the vehicle will travel (or is traveling) is divided into a plurality of partitions. The partitions are described by a corresponding three-dimensional volume (e.g., a rectangular prism). Each partition has a corresponding contingency route that can be accessed by a vehicle located anywhere within the partition. Anytime the vehicle is inside of the volumetric space, it would always move to a fixed area in the space and then begin its contingency route. Generally, the contingency volumes define relatively low-complexity airspaces.

A technical advantage of the systems and methods disclosed herein is that autonomous vehicle mission designers can now decouple the definition and verification of contingency planning from the definition of unique missions. This can enable individual mission more expressivity and lower risk.

Another technical advantage of the system and methods disclosed herein is that contingency volumes can build off each other. Building contingency volumes in such a manner allows for contingency planning that moves a vehicle from one partition to another, rather than requiring (for example) a command to ground from each partition. This can allow, for example, an autonomous aerial vehicle to have a contingency plan that allows for the vehicle to move from a higher altitude to a lower altitude.

Another technical advantage of the systems and methods disclosed herein is the improvement of autonomous vehicles and their associated electronic control systems. For example, by enabling more efficient, robust, and effective contingency planning, an autonomous vehicle can have extended operational life, safer operations, etc.

The figures and the following description illustrate specific examples. It will be appreciated that those skilled in the art will be able to devise various arrangements that, although not explicitly described or shown herein, embody the principles described herein and are included within the scope of the claims that follow this description. Furthermore, any examples described herein are intended to aid in understanding the principles of the disclosure and are to be construed as being without limitation. As a result, this disclosure is not limited to the specific examples described below, but by the claims.

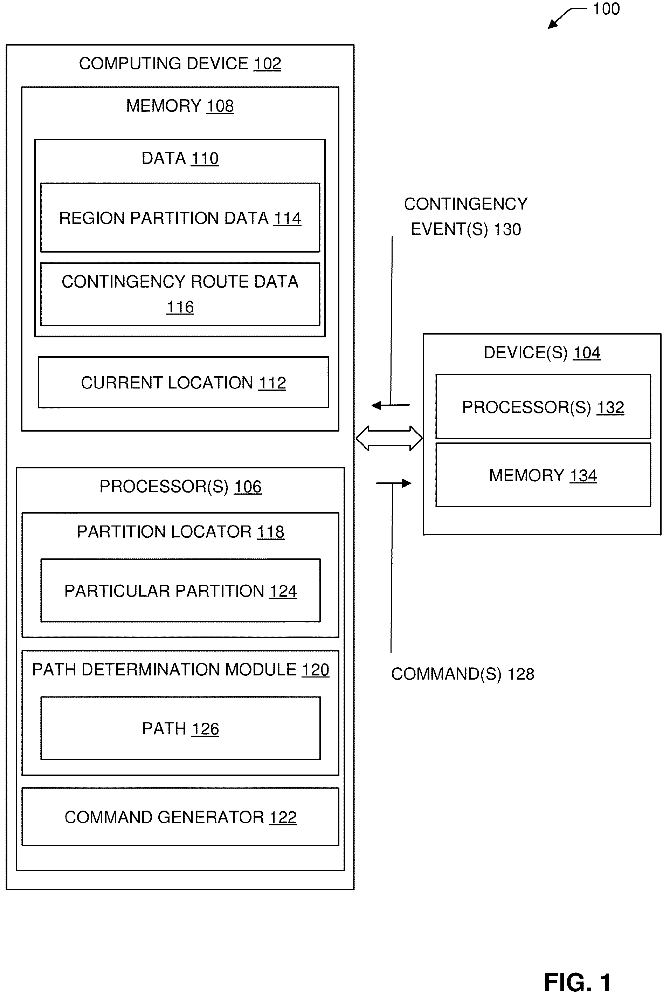

Particular examples are described herein with reference to the drawings. In the description, common features are designated by common reference numbers throughout the drawings. As used herein, various terminology is used for the purpose of describing particular examples only and is not intended to be limiting. For example, the singular forms "a," "an," and "the" are intended to include the plural forms as well, unless the context clearly indicates otherwise. Further, some features described herein are singular in some examples and plural in other examples. To illustrate, FIG. 1 depicts a system 100 including one or more processors ("processor(s)" 106 in FIG. 1), which indicates that in some examples the system 100 includes a single processor 106 and in other examples the system 100 includes multiple processors 106. For ease of reference herein, such features are generally introduced as "one or more" features and are subsequently referred to in the singular unless aspects related to multiple of the features are being described.

The terms "comprise," "comprises," and "comprising" are used interchangeably with "include," "includes," or "including." Additionally, the term "wherein" is used interchangeably with the term "where." As used herein, "exemplary" indicates an example and should not be construed as limiting or as indicating a preference or a preferred example. As used herein, an ordinal term (e.g., "first," "second," "third," etc.) used to modify an element, such as a structure, a component, an operation, etc., does not by itself indicate any priority or order of the element with respect to another element, but rather merely distinguishes the element from another element having a same name (but for use of the ordinal term). As used herein, the term "set" refers to a grouping of one or more elements, and the term "plurality" refers to multiple elements.

As used herein, "generating," "calculating," "using," "selecting," "accessing," and "determining" are interchangeable unless context indicates otherwise. For example, "generating," "calculating," or "determining" a parameter (or a signal) can refer to actively generating, calculating, or determining the parameter (or the signal) or can refer to using, selecting, or accessing the parameter (or signal) that is already generated, such as by another component or device. As used herein, "coupled" can include "communicatively coupled," "electrically coupled," or "physically coupled," and can also (or alternatively) include any combinations thereof. Two devices (or components) can be coupled (e.g., communicatively coupled, electrically coupled, or physically coupled) directly or indirectly via one or more other devices, components, wires, buses, networks (e.g., a wired network, a wireless network, or a combination thereof), etc. Two devices (or components) that are electrically coupled can be included in the same device or in different devices and can be connected via electronics, one or more connectors, or inductive coupling, as illustrative, non-limiting examples. In some examples, two devices (or components) that are communicatively coupled, such as in electrical communication, can send and receive electrical signals (digital signals or analog signals) directly or indirectly, such as via one or more wires, buses, networks, etc. As used herein, "directly coupled" is used to describe two devices that are coupled (e.g., communicatively coupled, electrically coupled, or physically coupled) without intervening components.

FIG. 1 depicts an example system 100 for autonomous vehicle contingency planning with three-dimensional volumes, in accordance with the subject disclosure. In some examples, the system 100 includes a computing device 102 configured to communicate with one or more electronic devices 104, and to receive one or more contingency events 130 from the device(s) 104.

In some examples, the device(s) 104 can be configured to control some or all operations of an autonomous vehicle. The device(s) can include, be incorporated within, or be associated with the autonomous vehicle. For example, a particular device 104 can be part of a flight control system for an unmanned aerial vehicle.

The device(s) 104 can include one or more processors 132 coupled to a memory 134. In some examples, the device(s) 104 can be configured to communicate one or more contingency events 130 to the computing device 102. The contingency event(s) 130 can include data associated with one or more contingency events associated with the autonomous vehicle. The contingency events may require changes to the operation of the unmanned vehicle. For example, the contingency event(s) 130 can include data associated with operational mechanical issues, electrical issues, etc. that may necessitate a change to the unmanned vehicle's planned mission. For example, the contingency event(s) 130 can correspond to a land-as-soon-as-possible contingency event, a land-as-soon-as-practical contingency event, or a combination thereof.

In some examples, the computing device 102 is an electronic device that includes one or more processors 106 coupled to a memory 108. The memory 108 can be configured to include data 110, data associated with a current location 112 of the unmanned vehicle, or a combination thereof. In some examples, the data 110 includes region partition data 114, contingency route data 116, or a combination thereof.

The region partition data 114 can include data identifying a region associated with travel of the autonomous vehicle. For example, the region can indicate a portion of airspace through which an autonomous aerial vehicle is currently traveling, plans to travel, etc. In some examples, the region partition data 114 also include data identifying, for each region, a plurality of partitions of the region. For example, the airspace through which the autonomous aerial vehicle is traveling can be subdivided into a plurality of partitions.

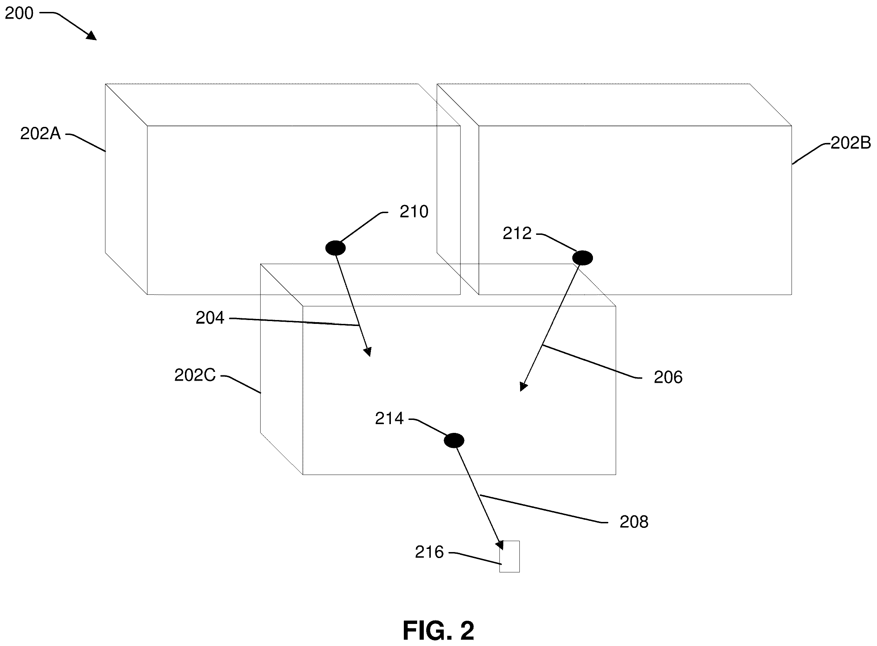

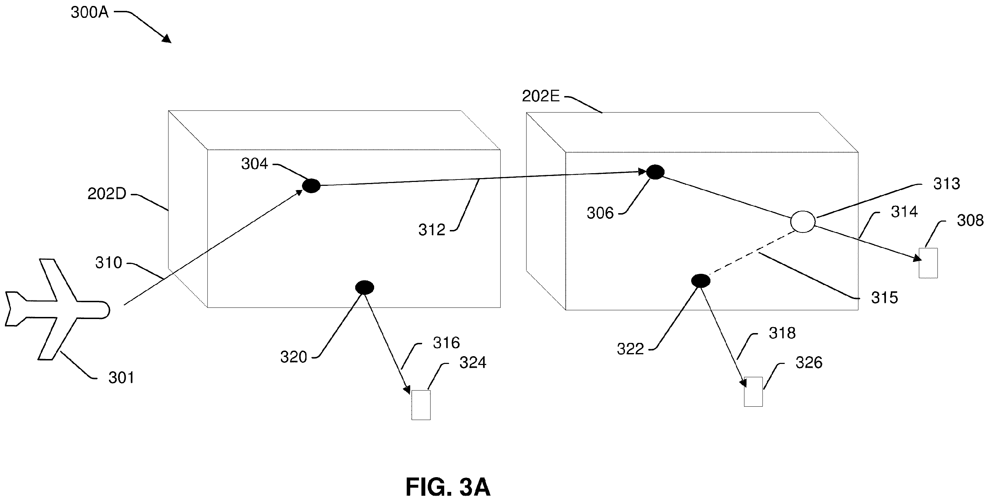

In some examples, the region partition data 114 includes data that identifies the region and its corresponding plurality of partitions as volumes of three-dimensional space. For example, as described below with reference to FIGs. 2 and 3A-3B, the region (and its corresponding partitions) can be described by subdividing a three-dimensional space into rectangular prisms. The region partition data 114 can include data that identifies coordinates for the eight vertices that define each rectangular prism, ranges of coordinates that identify the space defined by the rectangular prism, or other appropriate data used to divide three-dimensional space into corresponding regions and partitions. The region partition data 114 can also divide three-dimensional space into partitions via other volumes (e.g., cubes, funnels, etc.).

The contingency route data 116 can include data associated with a contingency route for the autonomous vehicle. For example, the contingency route data 116 can include data identifying, for an aerial vehicle traveling through an airspace, a route to ground. In some examples, the contingency route data 116 includes data associated with an entry point into the contingency route for the particular partition, as described in more detail below with reference to FIGs. 2 and 3A-3B. In some configurations, the entry point can be a location at particular coordinates within the particular partition. In the same or alternative configurations, the entry point can be a location along the contingency route for the particular partition. In a particular configuration, entry points to the contingency route can be constrained to be at a particular point within the particular partition, on a boarder of the particular partition, or a combination thereof. In some examples, the contingency route data 116 can include data associated with a contingency route that includes a route from the particular partition to a second partition, as illustrated with reference to FIGs. 2 and 3A-3B. For example, for an autonomous aerial vehicle traveling through an airspace, the particular partition can correspond to a first airspace at a higher elevation than a second airspace corresponding to the second partition.

The current location 112 can include data associated with the current location of the autonomous vehicle, for example, the current location 112 can include Global Positioning System (GPS) data, latitude and longitude coordinates, Universal Transverse Mercator (UTM) coordinates, etc. associated with the current location in space of the autonomous vehicle. The current location 112 can also include data used to identify the current location of the autonomous vehicle in three-dimensional space. For example, the current location 112 can include altitude data.

In some examples, the processor(s) 106 of the computing device 102 can include a partition locator 118, a path determination module 120, a command generator 122, or a combination thereof. The partition locator 118 can be configured to, based on detection of a first contingency event, locate a particular partition 124 of the region corresponding to the current location 112 of the autonomous vehicle. In some examples, detection of the first contingency event can include receiving data associated with the first contingency event from the contingency event(s) 130. Locating the particular partition 124 of the region corresponding to the current location 112 can include, for example, mapping the current location 112 to the region partition data 114 to identify the particular partition 124 of the region in which the autonomous vehicle is currently located.

In some configurations, locating the particular partition 124 can include mapping some or all of the current location 112 to the particular partition 124. For example, some missions may only necessitate identification of the vehicle location in two-dimensional space, while other missions may necessitate identification of the vehicle location in three-dimensional space.

The processor(s) 106 of the computing device 102 can also include the path determination module 120. The path determination module 120 can be configured to determine a path 126 for the autonomous vehicle to travel from the current location 112 to the contingency route for the particular partition. For example, as described in more detail below with reference to FIGs. 2 and 3A-3B, the path determination module 120 can be configured to determine the path 126 for the autonomous vehicle to travel from the current location 112 to the entry point into the contingency route for the particular partition in which the autonomous vehicle is currently located.

In three-dimensional space in which the vehicle can be located anywhere within the particular partition 124, a contingency route may begin at a particular point within the particular partition 124. It can therefore be necessary to navigate the vehicle from its current location to the particular point within the particular partition 124. The path determination module 120 can be configured to generate the path 126 from the current location 112 to the particular point within the particular partition 124. In some examples, the path 126 can lead to an entry point for the contingency route for that partition. In the same or alternative examples, the path 126 can be an intercept course with the contingency route for the particular partition. In further the same or alternative examples, the path 126 can lead to a border point for a particular partition.

The processor(s) 106 of the computing device 102 can also include the command generator 122. The command generator 122 can be configured to generate one or more commands 128 to cause the autonomous vehicle to travel to the contingency route. The computing device 102 can be configured to communicate the command(s) 128 generated by the command generator 122 to the device(s) 104. For example, the command generator 122 can be configured to generate navigational commands for issuance to the vehicle (e.g., via the device(s) 104) that cause the vehicle to navigate along the path 126 determined by the path determination module 120 to the entry point into the contingency route for the particular partition 124.

In some examples, the command generator 122 can also be configured to generate one or more additional commands 128 to cause the autonomous vehicle to follow the contingency route. For example, in addition to navigating to the entry point, the commands 128 generated by the command generator 122 can include navigational commands that cause the vehicle to navigate along the contingency route.

In operation, the device(s) 104 associated with an autonomous vehicle can communicate one or more contingency events 130 to the computing device 102. Based on detection of a first contingency event of the contingency event(s) 130, the partition locator 118 of the computing device 102 can locate a particular partition 124 of a region of three-dimensional space corresponding to the current location 112 of the autonomous vehicle. Region partition data 114 identifying the region, and partitions of that region, is part of the data 110 stored at the memory 108. The computing device 102 can be configured to determine the path 126 for the autonomous vehicle to travel from the current location 112 to the contingency route for the particular partition 124. Contingency route data 116 identifying the contingency route is part of the data 110 stored at the memory 108.

The system 100 can also include components not illustrated in FIG. 1. For example, the computing device 102 can also include a transmitter configured to communicate the command(s) 128 to the device(s) 104. The transmitter can be configured to transmit the data, for example, via a radio frequency or an infrared frequency. In some examples, the system 100 can also include one or more input/output interfaces, one or more network interfaces, etc.

Further, although FIG. 1 illustrates the memory 108 of the system 100 as storing certain data 110, more, fewer, and/or different data can be present within the memory 108 without departing from the scope of the subject disclosure. For example, the data 110 can also include an immediate-to-ground location associated with each partition. The processor(s) 106 can be further configured to, based on detection of a second contingency event of the contingency event(s) 130 corresponding to an immediate-to-ground event when the autonomous vehicle is in a first partition, generate one or more commands 128 to cause the vehicle to travel to the immediate-to-ground location associated with the first partition.

Additionally, although FIG. 1 illustrates certain operations occurring within the computing device 102, these operations can be performed by other components of the system 100 without departing from the scope of the subject disclosure. For example, one or more databases external to the computing device 102 can be configured to host or otherwise incorporate some or all of the region partition data 114, contingency route data 116, current location 112, contingency event(s) 130, or some combination thereof. Such database(s) can be located remotely from the computing device 102 and accessed via a modem of the computing device 102.

Further, although FIG. 1 illustrates the computing device 102 and the device(s) 104 as separate, other configurations are possible without departing from the scope of the subject disclosure. For example, the computing device 102 and the device(s) 104 can be integrated into an autonomous vehicle (e.g., as part of an autonomous aerial vehicle flight control system), include the autonomous vehicle (e.g., as part of a larger system 100), be coupled to the autonomous vehicle, or a combination thereof (e.g., via wired and/or wireless communication). In some examples, the computing device 102 can be configured to determine paths 126 for a plurality of autonomous vehicles, and the computing device 102 can be configured to receive contingency event(s) 130 from a corresponding plurality of devices 104 and communicate respective commands 128 to those devices 104.

FIG. 2 illustrates an example region 200 divided into a plurality of partitions 202, in accordance with the subject disclosure. The example region 200 includes three partitions 202A, 202B, 202C, illustrated as rectangular prisms, adjacent to one another. As described above with reference to FIG. 1, the region 200 can include more, fewer, and/or different partitions 202 than those illustrated. For example, the region 200 can include four partitions 202, where each partition 202 is defined as a volumetric funnel.

In some examples, the partitions 202 can define an area of an airspace through which an autonomous aerial vehicle to travel (or is traveling). In some configurations, the partitions 202 can be adjacent to one another to ensure that the entirety of the airspace region is covered by contingency planning. In the same or alternative configurations, the partitions 202 can be separated. For example, mission planners can determine that particular portions of an airspace do not need an associated contingency plan. Further, different partitions 202 of the region 200 can correspond to different vertical and/or horizontal portions of the region 200. For example, different partitions 202 of an airspace can correspond to identical (or substantially identical) two-dimensional portions of the region 200, but be placed at different altitudes.

Each of the partitions 202 includes an associated contingency route for an autonomous vehicle traveling through the respective partition 202. For example, the partition 202A includes the contingency route 204, the partition 202B includes the contingency route 206, and the partition 202C includes the contingency route 208. Each of the contingency routes 204, 206, 208 describes a navigational path out of the respective partition 202 to a new location. For example, the contingency route 204 describes a path from the partition 202A to the partition 202C, the contingency route 206 describes a path from the partition 202B to the partition 202C, and the contingency route 208 describes a path from the partition 202C to a ground location 216.

The example region 200 also includes a plurality of entry points 210, 212, 214, with each entry point 210, 212, 214 associated with a respective one of the contingency routes 204, 206, 208. For example, the entry point 210 identifies a location within the partition 202A to which the autonomous vehicle should navigate in order to commence the contingency route 204.

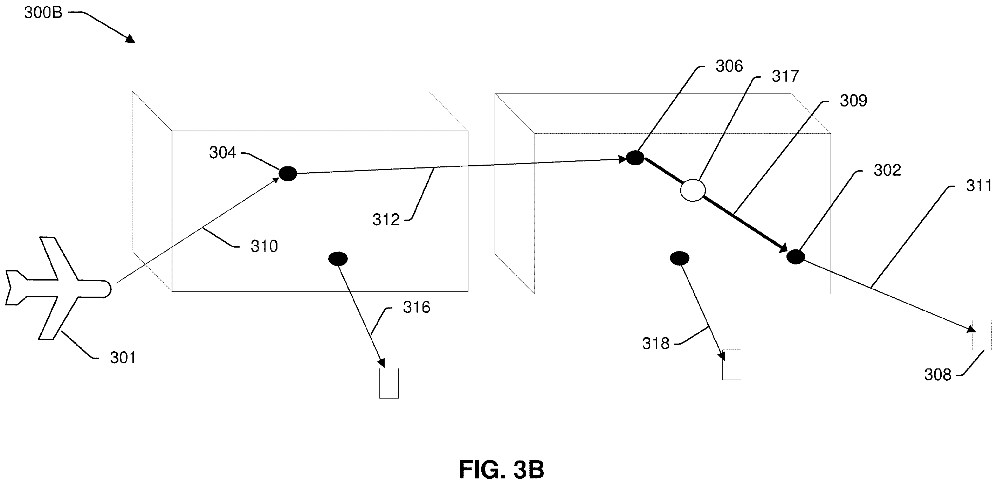

Operation of the system 100 of FIG. 1 in the example region 200 illustrates how the system 100 enables certain technical advantages of the systems and methods disclosed herein. As described below with reference to FIGs. 3A and 3B, the definition and verification of contingency planning can be decoupled from the definition of unique missions. This can enable greater mission flexibility. The example region 200 also illustrates how contingency volumes can build off each other. Building contingency volumes in such a manner allows for contingency planning that moves a vehicle from one partition to another, rather than requiring (for example) a command to ground from each partition. This can allow, for example, an autonomous aerial vehicle to have a contingency plan that allows for the vehicle to move from a higher altitude to a lower altitude. Operation of the system 100 of FIG. 1 in the example region 200 illustrates more efficient, robust, and effective contingency planning, enabling an autonomous vehicle to have extended operational life, safer operations, etc.

FIG. 3A illustrates an example mission 300A that includes a plurality of waypoints 304, 306, 308 across a region of an airspace, in accordance with the subject disclosure. The example mission 300A includes three legs 310, 312, 314. The first leg 310 extends from an entry point to a first waypoint 304, the second leg 312 extends from the first waypoint 304 to the second waypoint 306, and the third leg 314 extends from the second waypoint 306 to the third waypoint 308.

As described in more detail above with reference to FIGs. 1 and 2, the region of the airspace can be subdivided into a plurality of partitions 202. Each partition 202 can have an associated contingency route 316, 318. The contingency routes 316, 318 can each have an associated entry point 320, 322 and termination point 324, 326.

In operations, an autonomous vehicle 301 (e.g., an unmanned aerial vehicle) performing the mission 300A can find itself anywhere along the legs 310, 312, 314 when a contingency event occurs. Upon detection of a contingency event, a computing device (e.g., the computing device 102 of FIG. 1) can be configured to locate the particular partition 202 of the region corresponding to the current location of the autonomous vehicle 301. For example, the computing device can be configured to identify that the vehicle at a location 313 is within the particular partition 202E.

The computing device can also be configured to determine a path for the autonomous vehicle 301 to travel from the current location to the contingency route for the particular partition. For example, the computing device (e.g., the computing device 102 of FIG. 1) can be configured to determine the path 315 from the location 313 to the entry point 322 of the contingency route 318.

FIG. 3B illustrates an example mission 300B that includes a plurality of waypoints 302, 304, 306, 308 across a region of an airspace, in accordance with the subject disclosure. The example mission 300B illustrates a modified version of the mission 300A of FIG. 3A in which the waypoint 302 has been added between waypoints 306 and 308, and the leg 314 has been replaced by legs 309, 311 in the mission profile. The partitions 202D, 202E have associated contingency routes 316, 318, respectively, as described above with reference to FIG. 3A.

In certain traditional methods of contingency planning that rely on contingency route planning based on the waypoints associated with the mission, the addition of the waypoint 302 and the leg 311 could require replanning of contingency routes. Implementing contingency route planning based on three-dimensional volumes enables more robust and flexible contingency route planning at least by associating a contingency route with a region partition rather than a particular waypoint. So long as the vehicle is within a particular partition, the contingency route can remain unchanged. Referring again to FIG. 3B, the autonomous vehicle 301 at the location 317 will still proceed to the contingency route 318, even though the autonomous vehicle 301 may be traveling along leg 309 (as opposed to the location 313 along leg 314 of FIG. 3A).

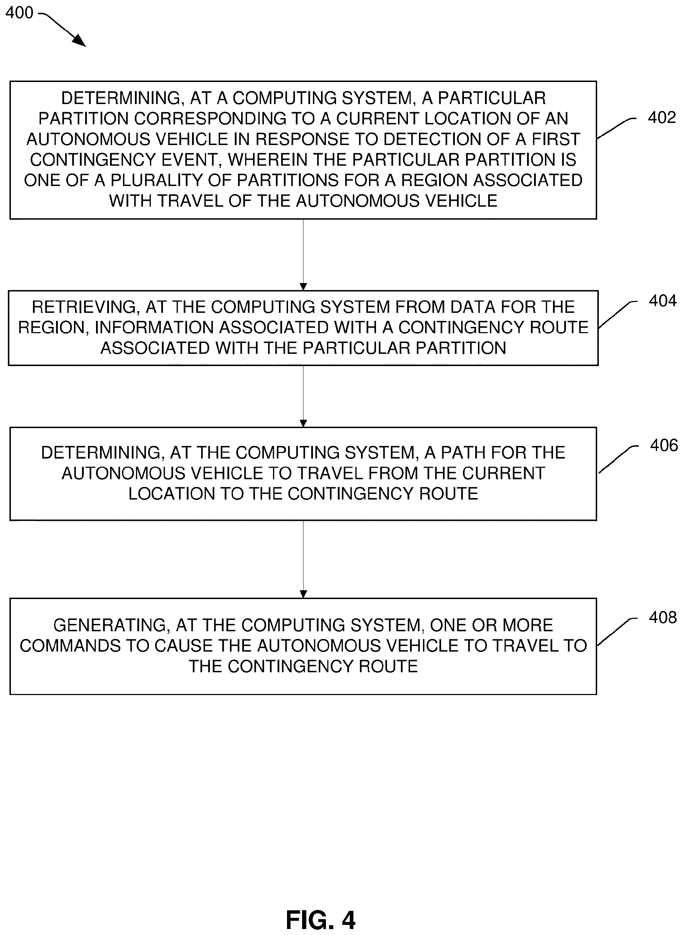

FIG. 4 illustrates a method 400 for autonomous vehicle contingency planning with three-dimensional volumes, in accordance with the subject disclosure. The method 400 can be initiated, performed, or controlled by one or more processors executing instructions, such as by the processor(s) 106 of FIG. 1 executing instructions from the memory 108.

In some examples, the method 400 includes, at block 402, determining, at a computing system, a particular partition corresponding to a current location of an autonomous vehicle in response to detection of a first contingency event, wherein the particular partition is one of a plurality of partitions for a region associated with travel of the autonomous vehicle. For example, the processor(s) 106 of FIG. 1 can determine a particular partition (e.g., the partition 202 of FIGs. 2 and 3A-3B) corresponding to the current location 112 of an autonomous vehicle in response to detection of a first contingency event of the contingency event(s) 130.

The method 400 also includes, at block 404, retrieving, at the computing system from data for the region, information associated with a contingency route associated with the particular partition. For example, the computing device 102 of FIG. 1 can retrieve, from the region partition data 114, information associated with a contingency route (e.g., the contingency routes 204, 206, 208 of FIG. 2, the contingency routes 316, 318 of FIG. 3A, etc.) associated with the particular partition (e.g., the partitions 202 of FIGs. 2 and 3A-3B).

The method 400 also includes, at block 406, determining, at the computing system, a path for the autonomous vehicle to travel from the current location to the contingency route. For example, the computing device 102 of FIG. 1 can determine the path 126 for the autonomous vehicle to travel from the current location 112 to the contingency route (e.g., the contingency routes 204, 206, 208 of FIG. 2, the contingency routes 316, 318 of FIG. 3A, etc.).

The method 400 also includes, at block 408, generating, at the computing system, one or more commands to cause the autonomous vehicle to travel to the contingency route. For example, the computing device 102 of FIG. 1 can generate the command(s) 128 to cause the autonomous vehicle to travel to the contingency route (e.g., the contingency routes 204, 206, 208 of FIG. 2, the contingency routes 316, 318 of FIG. 3A, etc.).

Although the method 400 is illustrated as including a certain number of steps, more, fewer, and/or different steps can be included in the method 400 without departing from the scope of the subject disclosure. For example, the method 400 can also include generating one or more additional commands to cause the autonomous vehicle to follow the contingency route. In some examples, the method 400 can include implementing one or more additional commands to direct the autonomous vehicle to ground, to another partition, etc. In some examples, the method 400 can include, when the data includes an immediate-to-ground location associated with each partition, and based on detection of a second contingency event corresponding to an immediate-to-ground event when the autonomous vehicle is in a first partition, generating one or more commands to cause the vehicle to travel to the immediate-to-ground location associated with the first partition.

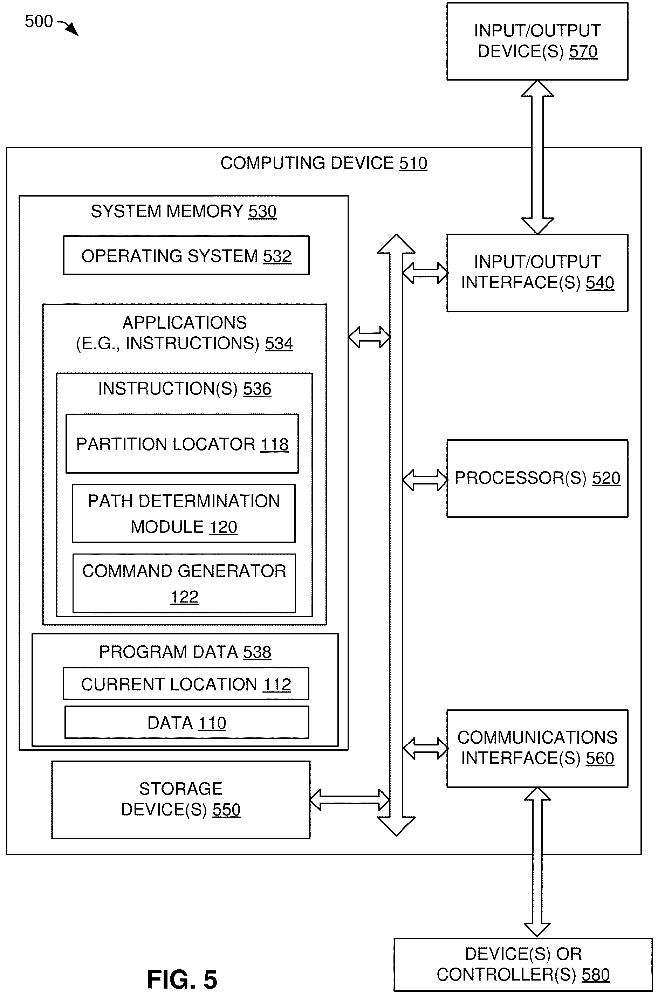

FIG. 5 is a block diagram of a computing environment 500 including a computing device 510 configured to support examples of computer-implemented methods and computer-executable program instructions (or code) according to the subject disclosure. For example, the computing device 510, or portions thereof, is configured to execute instructions to initiate, perform, or control one or more operations described in more detail above with reference to FIGs. 1-4. In some examples, the computing device 510 can include the computing device 102, the device(s) 104, one or more servers, one or more virtual devices, or a combination thereof.

The computing device 510 includes one or more processors 520. In some examples, the processor(s) 520 correspond to the processor(s) 106 of FIG. 1. The processor(s) 520 are configured to communicate with system memory 530, one or more storage devices 550, one or more input/output interfaces 540, one or more communications interfaces 560, or any combination thereof. The system memory 530 includes volatile memory devices (e.g., random access memory (RAM) devices), nonvolatile memory devices (e.g., read-only memory (ROM) devices, programmable read-only memory, and flash memory), or both. The system memory 530 stores an operating system 532, which can include a basic input/output system for booting the computing device 510 as well as a full operating system to enable the computing device 510 to interact with users, other programs, and other devices. The system memory 530 stores system (program) data 538, such as the current location 112, the data 110, or a combination thereof.

The system memory 530 includes one or more applications 534 (e.g., sets of instructions) executable by the processor(s) 520. For example, the one or more applications 534 include the instructions 536 executable by the processor(s) 520 to initiate, control, or perform one or more operations described with reference to FIGs. 1-4. In some examples, the instructions 536 include the partition locator 118 of FIG. 1, the path determination module 120, the command generator 122, or a combination thereof. To illustrate, the one or more applications 534 include the instructions 536 executable by the processor(s) 520 to initiate, control, or perform one or more operations described with reference to determining a particular partition corresponding to a current location of an autonomous vehicle in response to detection of a first contingency event, retrieving information associated with a contingency route associated with the particular partition, determining a path for the autonomous vehicle to travel from the current location to the contingency route, generating one or more commands to cause the autonomous vehicle to travel to the contingency route, or a combination thereof.

In some examples, the system memory 530 includes a non-transitory, computer readable medium (e.g., a computer-readable storage device) storing the instructions 536 that, when executed by the processor(s) 520, cause the processor(s) 520 to initiate, perform, or control operations for determining a particular partition corresponding to a current location of an autonomous vehicle in response to detection of a first contingency event. The particular partition is one of a plurality of partitions for a region associated with travel of the autonomous vehicle. The operations also include retrieving, at the computing system from data for the region, information associated with a contingency route associated with the particular partition. The operations also include determining, at the computing system, a path for the autonomous vehicle to travel from the current location to the contingency route. The operations also include generating one or more commands to cause the autonomous vehicle to travel to the contingency route.

The one or more storage devices 550 include nonvolatile storage devices, such as magnetic disks, optical disks, or flash memory devices. In some examples, the storage devices 550 include both removable and non-removable memory devices. The storage devices 550 are configured to store an operating system, images of operating systems, applications (e.g., one or more of the applications 534), and program data (e.g., the program data 538). In some examples, the system memory 530, the storage devices 550, or both, include tangible computer-readable media. In some examples, one or more of the storage devices 550 are external to the computing device 510.

The one or more input/output interfaces 540 enable the computing device 510 to communicate with one or more input/output devices 570 to facilitate user interaction. For example, the one or more input/output interfaces 540 can include a display interface, an input interface, or both. For example, the input/output interface 540 is adapted to receive input from a user, to receive input from another computing device, or a combination thereof. In some examples, the input/output interface 540 conforms to one or more standard interface protocols, including serial interfaces (e.g., universal serial bus (USB) interfaces or Institute of Electrical and Electronics Engineers (IEEE) interface standards), parallel interfaces, display adapters, audio adapters, or custom interfaces ("IEEE" is a registered trademark of The Institute of Electrical and Electronics Engineers, Inc. of Piscataway, New Jersey). In some examples, the input/output device(s) 570 include one or more user interface devices and displays, including some combination of buttons, keyboards, pointing devices, displays, speakers, microphones, touch screens, and other devices.

The processor(s) 520 are configured to communicate with devices or controllers 580 via the one or more communications interfaces 560. For example, the one or more communications interfaces 560 can include a network interface. The devices or controllers 580 can include, for example, the device(s) 104 of FIG. 1.

In some examples, a non-transitory, computer readable medium (e.g., a computer-readable storage device) stores instructions that, when executed by one or more processors, cause the one or more processors to initiate, perform, or control operations to perform part of or all the functionality described above. For example, the instructions can be executable to implement one or more of the operations or methods of FIGs. 1-4. In some examples, part or all of one or more of the operations or methods of FIGs. 1-4 can be implemented by one or more processors (e.g., one or more central processing units (CPUs), one or more graphics processing units (GPUs), one or more digital signal processors (DSPs)) executing instructions, by dedicated hardware circuitry, or any combination thereof.

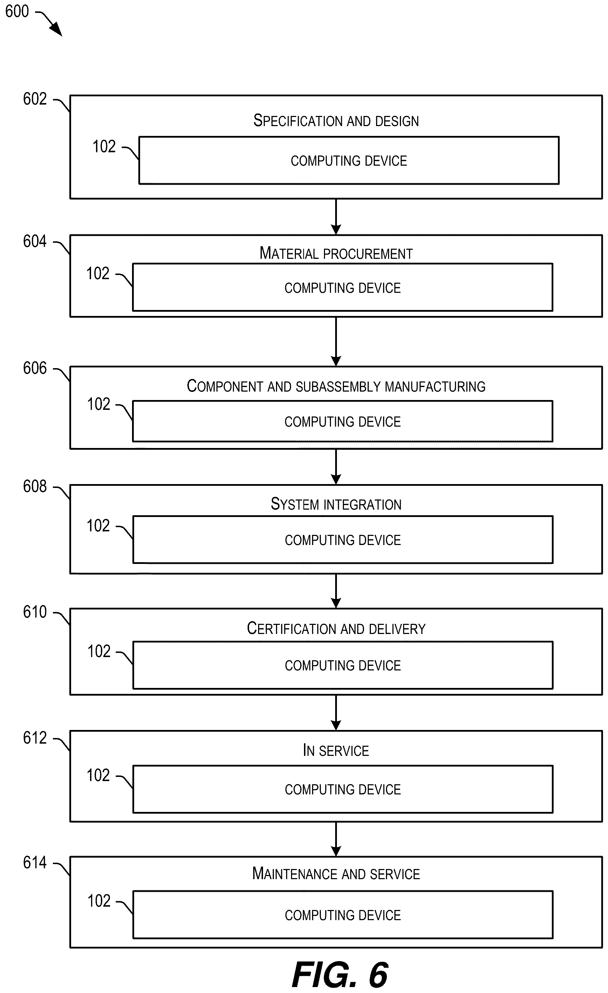

FIG. 6 is a flowchart illustrating an example 600 of a life cycle of an aircraft that includes the system 100 of FIG. 1, in accordance with the subject disclosure. During pre-production, the exemplary method 600 includes, at block 602, specification and design of the aircraft. During specification and design of the aircraft, the method 600 may include specification and design of the computing device 102 and locations where the computing device 102 are to be placed. At block 604, the method 600 includes material procurement, which may include procuring materials for the computing device 102 or procuring a pre-assembled computing device 102.

During production, the method 600 includes, at block 606, component and subassembly manufacturing and, at block 608, system integration of the aircraft. For example, the method 600 may include component and subassembly manufacturing of the computing device 102, system integration of the computing device 102 with the aircraft, or both. At block 610, the method 600 includes certification and delivery of the aircraft and, at block 612, placing the aircraft in service. Certification and delivery may include certification of the computing device 102 to place the computing device 102 in service. While in service by a customer, the aircraft may be scheduled for routine maintenance and service (which may also include modification, reconfiguration, refurbishment, and so on). At block 614, the method 600 includes performing maintenance and service on the aircraft, which may include performing maintenance and service on the computing device 102. For example, the maintenance and service can include updating one or more algorithms used by the estimation algorithm, replacing one or more interfaces, replacing one or more processors 106, or a combination thereof.

Each of the processes of the method 600 may be performed or carried out by a system integrator, a third party, and/or an operator (e.g., a customer). For the purposes of this description, a system integrator may include without limitation any number of aircraft manufacturers and major-system subcontractors; a third party may include without limitation any number of venders, subcontractors, and suppliers; and an operator may be an airline, leasing company, military entity, service organization, and so on.

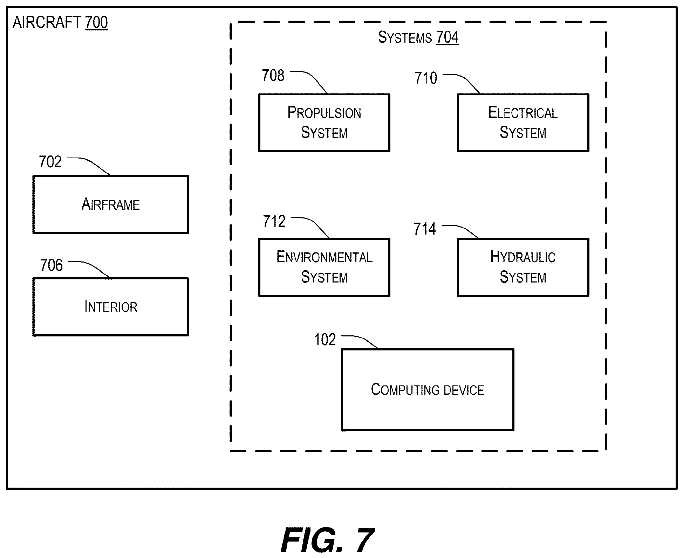

FIG. 7 is a block diagram of an illustrative aircraft that includes a pilot monitoring system, in accordance with the subject disclosure. In some examples including the example of FIG. 7, the aircraft 700 includes an airframe 702 with a plurality of systems 704 and an interior 706. Examples of the plurality of systems 704 include one or more of a propulsion system 708, an electrical system 710, an environmental system 712, a hydraulic system 714, and the computing device 102. Any number of other systems may be included. In some examples including the example of FIG. 7, the aircraft 700 includes the computing device 102 in accordance with one or more examples of the disclosure as described in FIGS. 1-7. Portions of the computing device 102 are included in the airframe 702 and the interior 706. Also, the computing device 102 utilizes portions of the electrical system 710. For example, the computing device 102 may be powered by the electrical system 710.

The illustrations of the examples described herein are intended to provide a general understanding of the structure of the various examples. The illustrations are not intended to serve as a complete description of all of the elements and features of apparatus and systems that utilize the structures or methods described herein. Many other examples can be apparent to those of skill in the art upon reviewing the disclosure. Other examples can be utilized and derived from the disclosure, such that structural and logical substitutions and changes can be made without departing from the scope of the claims. For example, method operations can be performed in a different order than shown in the figures or one or more method operations can be omitted. Accordingly, the disclosure and the figures are to be regarded as illustrative rather than restrictive.

Moreover, although specific examples have been illustrated and described herein, it should be appreciated that any subsequent arrangement designed to achieve the same or similar results can be substituted for the specific arrangements shown. This disclosure is intended to cover any and all subsequent adaptations or variations of various examples. Combinations of the above examples, and other examples not specifically described herein, will be apparent to those of skill in the art upon reviewing the description.

The Abstract of the Disclosure is submitted with the understanding that it will not be used to interpret or limit the scope or meaning of the claims. In addition, in the foregoing Detailed Description, various features can be grouped together or described in a single example for the purpose of streamlining the disclosure. Examples described above illustrate but do not limit the disclosure. It should also be understood that numerous modifications and variations are possible in accordance with the principles of the subject disclosure. As the following claims reflect, the claimed subject matter can be directed to less than all of the features of any of the disclosed examples. Accordingly, the scope of the disclosure is defined by the following claims.

Further, the disclosure comprises examples according to the following clauses:
According to Clause 1, a device includes a memory configured to store data. The data indicates, for a region associated with travel of an autonomous vehicle, a plurality of partitions of the region and, for each of the partitions, a contingency route for the autonomous vehicle. The device also includes one or more processors coupled to the memory and configured to, based on detection of a first contingency event, locate a particular partition of the region corresponding to a current location of the autonomous vehicle; determine a path for the autonomous vehicle to travel from the current location to the contingency route for the particular partition; and generate one or more commands to cause the autonomous vehicle to travel to the contingency route.

Clause 2 includes the device of Clause 1, wherein the one or more processors are further configured to generate one or more additional commands to cause the autonomous vehicle to follow the contingency route.

Clause 3 includes the device of Clause 1 or Clause 2, wherein the data, for each partition, includes an entry point into the contingency route for the partition.

Clause 4 includes the device of any of Clauses 1 to 3, wherein the autonomous vehicle comprises an aerial vehicle and each partition corresponds to an airspace.

Clause 5 includes the device of any of Clauses 1 to 4, wherein the contingency route comprises a route to ground.

Clause 6 includes the device of any of Clauses 1 to 5, wherein the contingency route comprises a route from the particular partition to a second partition.

Clause 7 includes the device of Clause 6, wherein the particular partition corresponds to a first airspace at a higher elevation than a second airspace corresponding to the second partition.

Clause 8 includes the device of any of Clauses 1 to 7, wherein the data includes an immediate-to-ground location associated with each partition, and wherein the one or more processors are further configured to, based on detection of a second contingency event corresponding to an immediate-to-ground event when the autonomous vehicle is in a first partition, generate one or more commands to cause the vehicle to travel to the immediate-to-ground location associated with the first partition.

Clause 9 includes the device of any of Clauses 1 to 8, wherein the first contingency event corresponds to a land-as-soon-as-possible contingency event.

Clause 10 includes the device of any of Clauses 1 to 8, wherein the first contingency event corresponds to a land-as-soon-as-practical contingency event.

According to Clause 11, an autonomous aerial vehicle includes a memory configured to store data. The data indicates, for a region associated with a mission, a plurality of airspaces in the region and, for each of the airspaces, a contingency route. The autonomous aerial vehicle also includes one or more processors coupled to the memory and configured to, based on detection of a first contingency event during flight, locate a particular airspace in the region corresponding to a current location of the autonomous aerial vehicle; determine a path for the autonomous aerial vehicle to travel from the current location to the contingency route for the particular airspace; and generate one or more commands to cause the autonomous aerial vehicle to travel to the contingency route.

Clause 12 includes the autonomous aerial vehicle of Clause 11, wherein the one or more processors are further configured to generate one or more additional commands to cause the autonomous aerial vehicle to follow the contingency route.

Clause 13 includes the autonomous aerial vehicle of Clause 11 or Clause 12, wherein the data includes an immediate-to-ground location associated with each airspace, and wherein the one or more processors are further configured to, based on detection of a second contingency event corresponding to an immediate-to-ground event when the autonomous aerial vehicle is in a first airspace, generate one or more commands to cause the autonomous aerial vehicle to travel to the immediate-to-ground location associated with the first airspace.

Clause 14 includes the autonomous aerial vehicle of any of Clauses 11 to 13, wherein the contingency route comprises a route from the particular airspace to a second airspace located lateral to the particular airspace.

Clause 15 includes the autonomous aerial vehicle of any of Clauses 11 to 14, wherein contingency routes for the airspaces are independent of the mission.

According to Clause 16, a method includes determining, at a computing system, a particular partition corresponding to a current location of an autonomous vehicle in response to detection of a first contingency event, wherein the particular partition is one of a plurality of partitions for a region associated with travel of the autonomous vehicle; retrieving, at the computing system from data for the region, information associated with a contingency route associated with the particular partition; determining, at the computing system, a path for the autonomous vehicle to travel from the current location to the contingency route; and generating, at the computing system, one or more commands to cause the autonomous vehicle to travel to the contingency route.

Clause 17 includes the method of Clause 16 and further includes generating one or more additional commands to cause the autonomous vehicle to follow the contingency route.

Clause 18 includes the method of Clause 17 and further includes implementing the one or more additional commands to direct the autonomous vehicle to ground.

Clause 19 includes the method of Clause 17 or Clause 18 and further includes implementing the one or more additional commands to direct the autonomous vehicle to another partition.

Clause 20 includes the method of any of Clauses 16 to 19, wherein the data includes an immediate-to-ground location associated with each partition, and further comprising, based on detection of a second contingency event corresponding to an immediate-to-ground event when the autonomous vehicle is in a first partition, generating one or more commands to cause the vehicle to travel to the immediate-to-ground location associated with the first partition.

## Claims

1. A device comprising:
a memory configured to store data, wherein the data indicates, for a region associated with travel of an autonomous vehicle, a plurality of partitions of the region and, for each of the partitions, a contingency route for the autonomous vehicle; and
one or more processors coupled to the memory and configured to:
based on detection of a first contingency event, locate a particular partition of the region corresponding to a current location of the autonomous vehicle;
determine a path for the autonomous vehicle to travel from the current location to the contingency route for the particular partition; and
generate one or more commands to cause the autonomous vehicle to travel to the contingency route.

2. The device of claim 1, wherein the one or more processors are further configured to generate one or more additional commands to cause the autonomous vehicle to follow the contingency route.

3. The device of claim 1 or 2, wherein the data, for each partition, includes an entry point into the contingency route for the partition.

4. The device of any of claims 1 to 3, wherein the autonomous vehicle comprises an aerial vehicle and each partition corresponds to an airspace.

5. The device of claim 4, wherein the contingency route comprises a route to ground or a route from the particular partition to a second partition.

6. The device of claim 5, wherein the particular partition corresponds to a first airspace at a higher elevation than a second airspace corresponding to the second partition.

7. The device of any of claims 4 to 6, wherein the data includes an immediate-to-ground location associated with each partition, and wherein the one or more processors are further configured to, based on detection of a second contingency event corresponding to an immediate-to-ground event when the autonomous vehicle is in a first partition, generate one or more commands to cause the vehicle to travel to the immediate-to-ground location associated with the first partition.

8. The device of any of claims 4 to 7, wherein the first contingency event corresponds to a land-as-soon-as-possible contingency event.

9. The device of any of claims 4 to 7, wherein the first contingency event corresponds to a land-as-soon-as-practical contingency event.

10. An autonomous aerial vehicle comprising the device of any of claims 4 to 9.

11. A method comprising:
determining, at a computing system, a particular partition corresponding to a current location of an autonomous vehicle in response to detection of a first contingency event, wherein the particular partition is one of a plurality of partitions for a region associated with travel of the autonomous vehicle;
retrieving, at the computing system from data for the region, information associated with a contingency route associated with the particular partition;
determining, at the computing system, a path for the autonomous vehicle to travel from the current location to the contingency route; and
generating, at the computing system, one or more commands to cause the autonomous vehicle to travel to the contingency route.

12. The method of claim 11, further comprising generating one or more additional commands to cause the autonomous vehicle to follow the contingency route.

13. The method of claim 12, further comprising implementing the one or more additional commands to direct the autonomous vehicle to ground and/or to another partition.

14. The method of any of claims 11 to 13, wherein the data includes an immediate-to-ground location associated with each partition, and further comprising, based on detection of a second contingency event corresponding to an immediate-to-ground event when the autonomous vehicle is in a first partition, generating one or more commands to cause the vehicle to travel to the immediate-to-ground location associated with the first partition.

15. A computer program comprising computer program instructions that, when executed by one or more computer processors, cause the one or more computer processors to perform the method of any of claims 11 to 14, or a computer readable medium having such a computer program stored thereon.
